# EUROPEAN PATENT SPECIFICATION

(11) **EP 2 517 822 B1**
(45) Date of publication and mention of the grant of the patent: **01.01.2014**
(21) Application number: 11177667.0
(22) Date of filing: 16.08.2011
(51) Int. Cl.: B23Q 1/00, B23Q 1/52, B23Q 3/08, B23B 31/00

(54) **Pneumatic clamping device**
Pneumatische Spannvorrichtung
Dispositif de serrage pneumatique

(30) Priority: 29.04.2011 TW 890207631
(43) Date of publication of application: 31.10.2012
(73) Proprietor: Autogrip Machinery Co., Ltd., Tai-Ping Village, Pu-Hsin, Hsiang Changhua Hsien (CN)
(72) Inventor: Chen, Chun-Chih, Changhua Hsien, (TW)
(74) Representative: Becker Kurig Straus

(56) References cited:
- EP-A1- 0 806 264
- US-A- 4 895 058

## Description

### BACKGROUND OF THE INVENTION

### 1. Field of the Invention

The present invention relates to a clamping device, and more particularly to a pneumatic clamping device with a pressured air feeding device for a working machine.

### 2. Description of Related Art

A working machine has a pneumatic clamper to clamp a working piece or a knife. To feed pressured air into the pneumatic clamper, a stopping bracket is provided to stop the rotation of the pneumatic clamper. A feeding cap is connected to the stopping bracket and is mounted around the pneumatic clamper to feed pressured air from an air source into the pneumatic clamper via air inlets in the clamper to make the clamper clamp or release.

In addition, EP 0 806 264 discloses a conventional pneumatic clamping device but has only a single set of air inlet and nozzle.

However, the conventional feeding cap is made of aluminum and has a complex structure, so the cost of manufacturing the conventional feeding cap is high. In addition, the conventional feeding cap is mounted around the pneumatic clamper in corporation with the stopping bracket, to assemble the feeding cap onto the pneumatic clamper is time-consuming.

To overcome the shortcomings, the present invention tends to provide a pneumatic clamping device to mitigate or obviate the aforementioned problems.

### SUMMARY OF THE INVENTION

The main objective of the invention is to provide a pneumatic clamping device for a working machine and having a simplified structure.

The pneumatic clamping has a base and a pressured air feeding device. The base has a body, a rotating shaft, a pneumatic clamper and two air inlets. The rotating shaft is mounted rotatably on the body and has a free end extending along a horizontal direction and exposed from the body. The pneumatic clamper is mounted on the free end of the rotating shaft. The air inlets are formed in a periphery of the hydraulic clamper. The pressured air feeding device is mounted on the body and has a cylinder, a nozzle bracket and two nozzles. The cylinder is mounted on the body and has a rod extending toward the hydraulic clamper. The nozzle bracket is mounted on the rod of the cylinder. The nozzles are mounted on the nozzle bracket and align respectively with the air inlets in the pneumatic clamper. Each air inlet has a nozzle cavity defined in the periphery of the hydraulic clamper and having a concave bottom. Each nozzle has a convex connecting head fitting with the concave bottom of the nozzle cavity of a correspond one of the air inlets.

Other objects, advantages and novel features of the invention will become more apparent from the following detailed description when taken in conjunction with the accompanying drawings.

### BRIEF DESCRIPTION OF THE DRAWINGS

Fig. 1 is a front view of a pneumatic clamping device in accordance with the present invention;
Fig. 2 is a side view of the pneumatic clamping device in Fig. 1;
Fig. 3 is an operational front view of the pneumatic clamping device in Fig. 1; and
Fig. 4 is an operational side view of the pneumatic clamping device in Fig. 1.

### DETAILED DESCRIPTION OF PREFERRED EMBODIMENT

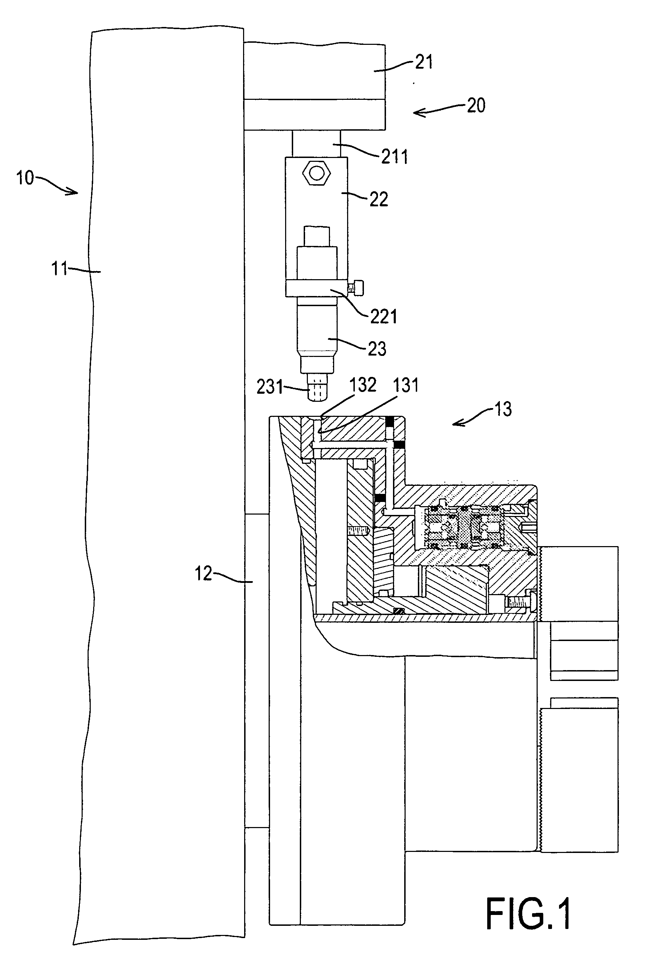

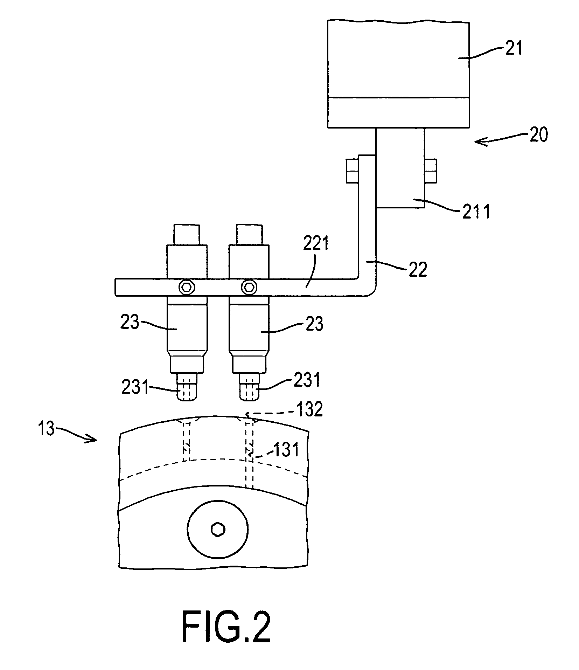

With reference to Figs. 1 and 2, a pneumatic clamping device for a working machine in accordance with the present invention comprises a base 10 and a pressured air feeding device 20.

The base 10 has a body 11, a rotating shaft 12, a pneumatic clamper 13 and two air inlets 131. The rotating shaft 12 is mounted rotatably on the body 11 having a free end extending along a horizontal direction and exposed from the body 11. The pneumatic clamper 13 is mounted on the free end of the rotating shaft 12 for holding a knife or a working piece. The air inlets 131 is formed in and juxtaposed on a periphery of the hydraulic clamper 13. Each air inlet 131 has a nozzle cavity 132 defined in the periphery of the hydraulic clamper 13 and having a concave bottom.

The pressured air feeding device 20 is mounted on the body 11 and has a cylinder 21, a nozzle bracket 22 and two nozzles 23. The cylinder 21 is mounted on the body 11 above the pneumatic clamper 13, may be a hydraulic or pneumatic cylinder and has a rod 211 extending toward the hydraulic clamper 13. The nozzle bracket 22 may be L-shaped, is mounted on the rod 211 of the cylinder 21 and has a horizontal plate 221. The nozzles 23 are mounted and juxtaposed on the nozzle bracket 22, are preferably mounted on the horizontal plate 221 of the nozzle bracket 22 and align respectively with the air inlets 131 in the pneumatic clamper 13. The nozzles 23 are connected to a pressured air source with pipes. Each nozzle has a convex connecting head 231 fitting with the concave bottom of the nozzle cavity 132 of a correspond one of the air inlets 131. The connecting head 231 of each nozzle 23 may be made of a resilient material.

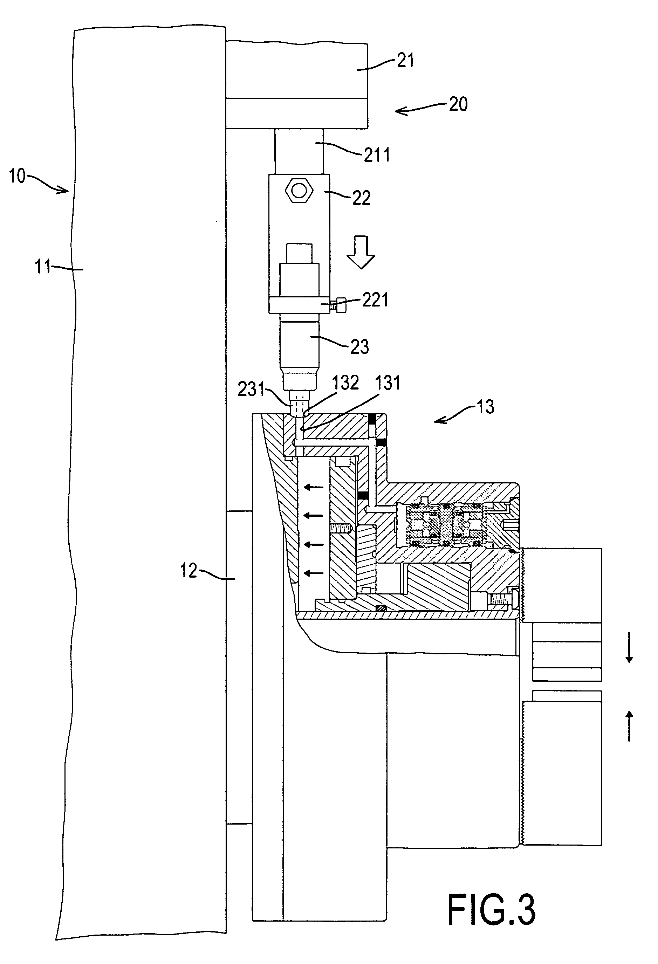

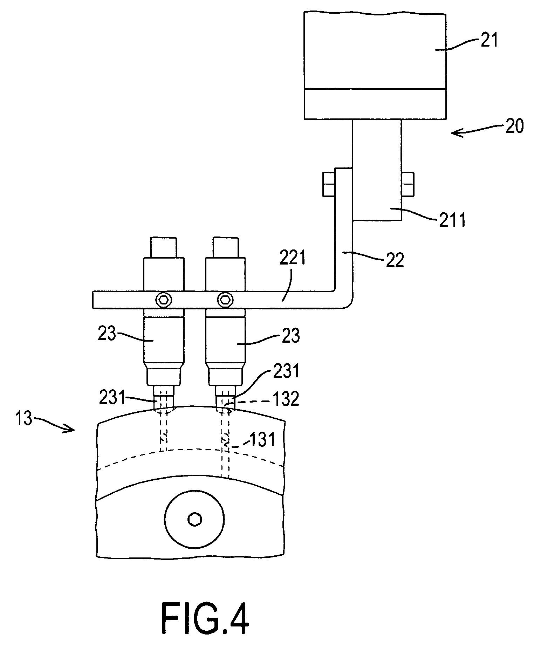

To clamp or release the pneumatic clamper 13, with reference to Figs. 3 and 4, the rotating shaft 12 is stopped rotating firstly to align the inlets 131 in the pneumatic clamper 13 respectively with the nozzles 23. Then, the cylinder 21 is actuated to expand the rod 211 from the cylinder 21 toward the clamper 13 to make the connecting heads 231 on the nozzles 23 matching with the concave bottoms of the nozzles cavities 132 of the air inlets 131. With the shapes of the connecting heads 231 and the concave bottoms of the nozzles cavities 132, the entrances of the air inlets 131 can be sealed. Accordingly, the pressured air can be led into the pneumatic clamper 13 via the nozzles 23 and the air inlets 131 to clamp or release the pneumatic clamper 13. After clamping or releasing the clamper 13, the cylinder 23 can drive the nozzles 23 to leave away from the air inlets 131 easily.

Because the pressured air feeding device 20 has two nozzles 23 driven by a single cylinder 21, the structure of the pressured air feeding device 20 can be efficiently simplified. Therefore, the cost and the time of manufacturing and assembling the pressured air feeding device 20 can be reduced.

## Claims

1. A pneumatic clamping device for a working machine comprising:
a base (10) having:
a body (11);
a rotating shaft (12) mounted rotatably on the body (11) and having a free end extending along a horizontal direction and exposed from the body (11);and
a pneumatic clamper (13) mounted on the free end of the rotating shaft (12); and
a pressured air feeding device (20) mounted on the body (11) and having
a cylinder (21) mounted on the body (11) and having a rod (211) extending toward the hydraulic clamper (13);
a nozzle bracket (22) mounted on the rod (211) of the cylinder (21), **characterized in that**
the base (10) has two air inlets (131) formed in a periphery of the hydraulic clamper (13), and each air inlet (131) has a nozzle cavity (132) defined in the periphery of the hydraulic clamper (13) and having a concave bottom; and
the pressured air feeding device (20) has two nozzles (23) mounted on the nozzle bracket (22) and aligning respectively with the air inlets (131) in the pneumatic clamper (13), and each nozzle (23) has a convex connecting head (231) fitting with the concave bottom of the nozzle cavity (132) of a correspond one of the air inlets (131).

2. The pneumatic clamping device as claimed in claim 1, wherein the connecting head (231) of each nozzle (23) is made of a resilient material.

## Patentansprüche

1. Pneumatische Klemmvorrichtung für eine Bearbeitungsmaschine, umfassend:
eine Basis (10) mit:
einem Hauptteil (11);
einer Rotationswelle (12), die rotierbar an dem Hauptteil (11) angebracht ist und ein freies Ende aufweist, das sich entlang einer horizontalen Richtung erstreckt und in Bezug auf das Hauptteil (11) freiliegt; und
eine pneumatische Klemme (13), die an dem freien Ende der Rotationswelle (12) angebracht ist; und
eine Druckluftzuführvorrichtung (20), die an dem Hauptteil (11) angebracht ist, mit
einem Zylinder (21), der an dem Hauptteil (11) angebracht ist und einen Stab (211) aufweist, der sich in Richtung der hydraulischen Klemme (13) erstreckt;
einer Düsenhalterung (22), die auf dem Stab (211) des Zylinders (21) angebracht ist, **dadurch gekennzeichnet, dass**
das Hauptteil (10) zwei Lufteinlässe (131) aufweist, die in einem Randbereich der hydraulischen Klemme (13) gebildet sind und jeder Lufteinlass (131) einen Düsenhohlraum (132) aufweist, der in dem Randbereich der hydraulischen Klemme (13) definiert ist und einen konkaven Boden aufweist; und
die Druckluftzuführvorrichtung (20) zwei Düsen (23) aufweist, die an der Düsenhalterung (22) angebracht sind und jeweils mit den Lufteinlässen (131) in der pneumatischen Klemme (13) ausgerichtet sind, und jede Düse (23) einen konvexen Verbindungskopf (231) aufweist, der in den konkaven Boden des Düsenhohlraums (132) eines entsprechenden der Lufteinlässe (131) passt.

2. Pneumatische Klemmvorrichtung gemäß Anspruch 1, wobei der Verbindungskopf (231) jeder Düse (23) aus einem elastischen Material gefertigt ist.

## Revendications

1. Dispositif de serrage pneumatique pour une machine-outil comprenant :
une base (10) présentant :
un corps (11) ;
un arbre rotatif (12) monté de façon rotative sur le corps (11) et présentant une extrémité libre s'étendant le long d'une direction horizontale et exposée depuis le corps (11) ; et
une pince pneumatique (13) montée sur l'extrémité libre de l'arbre rotatif (12) ; et
un dispositif d'alimentation en air pressurisé (20) monté sur le corps (11) et présentant
un cylindre (21) monté sur le corps (11) et présentant une tige (211) s'étendant en direction de la pince hydraulique (13) ;
une fixation de buse (22) montée sur la tige (211) du cylindre (21),
**caractérisé en ce que**
la base (10) présente deux entrées d'air (131) formées dans une périphérie de la pince hydraulique (13), et chaque entrée d'air (131) présente une cavité de buse (132) définie dans la périphérie de la pince hydraulique (13) et présentant un fond concave ; et
le dispositif d'alimentation en air pressurisé (20) présente deux buses (23) montées sur la fixation de buse (22) et s'alignant respectivement avec les entrées d'air (131) dans la pince pneumatique (13), et chaque buse (23) présente une tête de connexion convexe (231) correspondant au fond concave de la cavité de buse (132) de l'une correspondante des entrées d'air (131).

2. Dispositif de serrage pneumatique selon la revendication 1, dans lequel la tête de connexion (231) de chaque buse (23) est fabriquée dans un matériau résilient.
